# EUROPÄISCHE PATENTSCHRIFT

(11) **EP 0 666 096 B1**
(45) Veröffentlichungstag und Bekanntmachung des Hinweises auf die Patenterteilung: **13.05.1998**
(21) Anmeldenummer: 94118550.6
(22) Anmeldetag: 25.11.1994
(51) Int. Cl.: B01D 46/06

(54) **Wechselrahmen**
Changeable frame
Cadre de changement

(30) Priorität: 04.02.1994 DE 4403450
(43) Veröffentlichungstag der Anmeldung: 09.08.1995
(73) Patentinhaber: Firma Carl Freudenberg, 69469 Weinheim (DE)
(72) Erfinder: Held, Friedrich, D-69226 Nussloch (DE); Reinhardt, Heinz, Dr., D-68535 (DE); Hofmann, Margit, D-69517 Groxheimertal (DE)

(56) Entgegenhaltungen:
- DE-U- 1 731 352
- DE-U- 7 201 291
- DE-U- 7 923 226
- DE-U- 9 315 694
- US-A- 3 190 059
- US-A- 4 056 375

## Beschreibung

Die Erfindung betrifft einen in einem Aufnahmerahmen verwendbaren Wechselrahmen für zumindest eine keilförmige Filtertasche aus einer flexiblen Filtermatte, umfassend zwei unter Zwischenfügung der Filtermatte mit Dichtflächen aneinander andrückbare biegesteife Stirnrahmen, die aneinander und an der Filtertasche festlegbar sind, wobei sich die Dichtflächen im wesentlichen quer zu der Anströmrichtung erstrecken und wobei die Stirnrahmen parallel zu der Anströmrichtung aneinander andrückbar sind.

Ein solcher Wechselrahmen ist aus der DE-U-1 731 352 bekannt. Die stirnseitige Mündung einer keilförmigen Filtertasche ist zwischen den Dichtflächen zweier Stirnrahmen angeordnet. Die Stirnrahmen sind parallel zu der Anströmrichtung aneinander andrückbar und deren Dichtflächen erstrecken sich quer zu der Anströmrichtung.

Ein weiterer Wechselrahmen, der die eingangs genannten Merkmale aufweist, ist aus der DE-U-7 923 226 bekannt. Die Filtermatte wird zwischen die Dichtflächen zweier Stirnrahmen gelegt. Dabei erstrecken sich die Dichtflächen quer zu der Anströmrichtung und die Stirnrahmen sind parallel zu der Anströmrichtung andrückbar.

Aus der US-A-3,190,059 ist ein Filter bekannt, der zur Halterung von mindestens einer Filtertasche zwei starre rechteckige Rahmen umfaßt. Der innere Rahmen wird unter Zwischenfügung des stirnseitig offenen Endes der Filtertasche in den äußeren Rahmen eingefügt und durch eine unlösbare Verbindung im wesentlichen quer zur Anströmrichtung an diesem befestigt.

Die Befestigung der beiden Rahmen aneinander sowie die dichtende Verpreßung des Filtermaterials erfolgt beispielsweise durch eine Niet-Verbindung. Dabei ist allerdings zu beachten, daß im Bedarfsfalle nur die gesamte Einheit, bestehend aus den beiden Rahmen und der unlösbar darin befestigten Filtertasche erfolgen kann. Eine Trennung der einzelnen Bestandteile, um beispielsweise nur die Filtertasche zu ersetzten oder die Bestandteile im Anschluß an ihre Verwendung einer Wiederverwertung zuzuführen, gestaltet sich problematisch.

Der Erfindung liegt die Aufgabe zugrunde, einen Wechselrahmen der vorbekannten Art derart weiterzuentwickeln, daß im Bedarfsfall unabhängig vom Austausch des Wechselrahmens ein Austausch der Filtertasche erfolgen kann, daß im Anschluß an die Verwendung des gesamten Bauteils, bestehend aus Wechselrahmen und Filtertasche, eine einfache Trennung der Einzelteile voneinander zwecks Wiederaufbereitung erfolgen kann und daß die gegenseitige Festlegung und das bedarfsweise Lösen der Bestandteile voneinander wesentlicht vereinfacht wird.

Diese Aufgabe wird erfindungsgemäß durch die Merkmale des Anspruchs 1 gelöst. Auf vorteilhafte Ausgestaltungen nehmen die Unteransprüche bezug.

Bei dem erfindungsgemäßen Wechselrahmen ist es vorgesehen, daß sich die Dichtflächen im wesentlichen quer zur Anströmrichtung erstrecken und parallel zur Anströmrichtung aneinander und die Filtermatte andrückbar sind. Der Ein- und Ausbau der Filtertasche ist hierdurch stark vereinfacht, wobei es von besonderer Bedeutung ist, daß sich eine von Staubdurchbruchstellen freie Verbindung zwischen der Filtertasche und dem Wechselrahmen wesentlich einfacher realisieren läßt als bisher. Von Bedeutung ist es diesbezüglich einerseits, daß sich die Dichtflächen quer zur Anströmrichtung erstrecken, was eine beliebig große Anpressung aneinander ermöglicht, andererseits daß es zur Erzielung eines guten Abdichtungsergebnisses nicht mehr erforderlich ist, eine genaue gegenseitige Abstimmung zwischen der Größe der Stirnrahmen und der Dicke der Filtermatte vorzusehen, um die Mindestanpressung zu erreichen. Dies ergibt sich unter Ausnutzung der Dickenelastizität der gebräuchlichen Filtermattenqualitäten, wenn die Dicke 1,1 - 10-mal so groß ist, wie der Abstand der Dichtflächen, vorteilhaft 2,0 - 4-mal. Die Stirnrahmen können im übrigen von übereinstimmender Größe sein, was ihre Herstellung wesentlich vereinfacht.

Die die Filtertasche bildende Filtermatte kann im einfachsten Fall zwischen ebenen, sich parallel zueinander erstreckenden Dichtflächen der Stirnrahmen eingespannt sein. Die Festlegung und das erzielte Abdichtungsergebnis beruhen bei einer solchen Ausführung neben der Dicke und der Federelastizität der Filtermatte, auf der Größe und Anpreßkraft, mit der die beiden Stirnrahmen während der bestimmungsgemäßen Verwendung die Filtermatte zwischen sich verpressen.

Eine gute Festlegung und Abdichtung der Filtertasche läßt sich mit besonders niedrigen Andrückkräften erreichen, wenn zumindest im Bereich von einer Dichtfläche in zumindest einem Teilbereich eine Dichtnut und/oder -leiste vorgesehen ist. Die Dichtnut und/oder - leiste soll möglichst umlaufend ausgebildet sein. Die Handhabung der Stirnrahmen beim Ein- oder Ausbau einer Filtertasche ist hierdurch stark vereinfacht. Als zweckmäßig hat es sich erwiesen, wenn im Bereich von beiden Dichtflächen umlaufende Dichtleisten und/oder -nuten vorgesehen sind, die in der Zwischenfügung der Filtermatte gegebenenfalls formschlüssig miteinander in Eingriff bringbar sind.

Die einzelne Filtertasche wird zweckmäßigerweise aus Einzelfiltermattenzuschnitten oder -bahnen aus einem dickenelastischen Filtervliesstoff hergestellt. Dieser kann auf Fasern eines Titers von beispielsweise 0,8 bis 50 dtex bestehen, die regellos zusammengelagert und miteinander verklebt und/oder vernadelt sind. Als sekundäres Bindemittel gelangt bevorzugt ein Acrylat zur Anwendung. Alternativ und/oder ergänzend können die Fasern an ihren Kreuzungsstellen autogen verschweißt sein. Die Zuschnitte oder Bahnen werden paarweise Staubluffseite auf Staubluftseite aufeinander gelegt und entlang der Kante miteinander verschweißt. Zur Erzielung einer weiteren Aussteifung sowie einer Optimierung der Anströmverhältnisse in das Innere der Tasche können je nach Qualität der Filtermedien und ihrer Durchflußwiderstände unterschiedlich viele Distanzelemente aus Vliesstoff, Folie oder auch Gewebe eingeklebt oder eingeschweißt sowie durch lokales Verschweißen des Filterwerkstoffs zusätzliche Versteifungsrippen eingefügt werden. Die Ausbildung doppelwandiger Distanzelemente als trapezförmige, tütenähnliche Einschübe, hat sich hinsichtlich der Stabilisierung der dem Luftstrom ausgesetzten Filtertaschen als besonders vorteilhaft erwiesen. Die Filtertaschen neigen nicht zu Flatterbewegungen und das Filterelement erreicht hinsichtlich seiner Staubabscheidung und -speicherung die Leistungsstufe fester Hochoberflächenfilter.

Die Stirnrahmen können durch Vorsprünge aneinander festgelegt sein, die die Filtertasche im wesentlichen parallel zur Anströmrichtung durchdringen. Die Filtertasche kann entsprechend der Anzahl und Abmessungen der Vorsprünge an ihrer offenen Stirnseite Ausnehmungen aufweisen, die als Befestigungslöcher ausgebildet und auf die Vorsprünge auffädelbar sind. Gelangen mehrere keilförmige Filtertaschen zur Anwendung, die einander benachbart angeordnet und in einem gemeinsamen Wechselrahmen angeordnet sind, dann können die Ausnehmungen der aneinander angrenzenden Filtertaschen von denselben Vorsprüngen der Stirnrahmen durchdrungen sein. Sogenannte Multitaschen sind ebenfalls verwendbar. Sie bestehen aus mehreren keilförmig ausgebildeten Filtertaschen, die bereits vor der gemeinsamen Festlegung in dem Wechselrahmen vereint und als geschlossene Einheit handhabbar sind.

Gemäß einer vorteilhaften Ausgestaltung können die Vorsprünge an dem der Reinluftseite zugewandten Stirnrahmen festgelegt sein und an den der Anströmrichtung zugewandten Enden jeweils eine Verdickung aufweisen, wobei die Verdickungen in Hinterschneidungen des der Anströmseite zugewandten Stirnrahmens einrastbar sind. Die Montage der Filtertaschen im Wechselrahmen erfolgt dadurch, daß die Ausnehmungen in der offenen Stirnseite der Filtertasche über die Verdickung auf die Vorsprünge des der Reinluftseite zugewandte Stirnrahmens aufgefädelt werden.

Die Hinterschneidungen können einen Bestandteil von Druckknöpfen bilden, welche beim Zusammenfügen der Stirnrahmen auf die Vorsprünge aufgedrückt und hinter deren Verdickung einrasten. Die gegenseitige Festlegung und das bedarfsweise Lösen der Bestandteile voneinander gestalten sich bei einer solchen Ausführung sehr einfach, wobei hinsichtlich der benötigten Einzelteile auf Elemente zurückgegriffen werden kann, die sich auf gattungsfremden Gebieten bewährt haben und kostengünstig verfügbar sind.

Nach einer bevorzugten Ausgestaltung können die Verdickungen der Vorsprünge eine geringfügig größere Ausdehnung aufweisen, als die Ausnehmungen der Filtertasche. Dadurch wird eine selbsthemmende Befestigung der Filtertasche an den Vorsprüngen bewirkt, wenn der abdeckende Stirnrahmen noch nicht montiert ist. Eine solche Vereinfachung in der Montage macht sich insbesondere dann bemerkbar, wenn mehrere einander benachbarte Filtertaschen zunächst in den einen Stirnrahmen eingehängt werden und anschließend gemeinsam durch den abdeckenden Stirnrahmen dichtend verpreßt werden sollen.

Der Wechselrahmen kann beispielsweise aus polymerem Werkstoff bestehen, wobei der Stirnrahmen, die Vorsprünge und die Verdickungen einstückig ineinander übergehend ausgebildet sein können. Nach einer anderen Ausgestaltung können die Stirnrahmen aus einem metallischen Werkstoff bestehen und Vorsprünge aufweisen, die angeschweißt sind. Die rastbare Verbindung der mit den Verdickungen versehenen Vorsprünge in Hinterschneidungen des abdeckenden Stirnrahmens bedingt eine einfache Auswechselbarkeit der Filtertaschen mit minimalem Montageaufwand.

Eine weitere Ausführung stellen Vorsprünge dar, die als Clip ausgebildet sind. Dadurch kann der Wechselrahmen leicht montiert werden. Mit dem Einrasten des Clips in den aufgesetzten Stirnrahmen kann das Aneinanderfestlegen der Stirnrahmen erfolgen, ohne daß weitere Montageschritte erforderlich sind.

Durch die mehrfache Verwendung eines Wechselrahmens können aufwendige Transportwege und -kosten eingespart werden. Der Rahmen kann direkt am Einsatzort montiert werden. Die Einzelteile benötigen wenig Platz während ihres Transportes und der Lagerung.

Die Hinterschneidungen des abdeckenden Stirnrahmens können jeweils durch ein Langloch gebildet sein, das sich quer zur Anströmrichtung erstreckt, wobei die Langlöcher in Montagerichtung des der Anströmseite zugewandten Stirnrahmens hinsichtlich ihres Querschnitts erweitert sind und wobei der der Anströmseite zugewandte Stirnrahmen entgegen der Montagerichtung versetzt auf die Vorsprünge aufstülpbar und durch eine Relativverschiebung in Montagerichtung an den Vorsprüngen festlegbar ist. Die bajonettverschlußartige Festlegung der beiden Stirnrahmen unter Zwischenfügung der Filtertasche ist in montagetechnischer Hinsicht besonders vorteilhaft, so daß derartige Wechselrahmen bevorzugt dann zur Anwendung gelangen, wenn die zu filternde Luft besonders viele Verunreinigungen enthält und daher ein Austausch der Filtertasche in vergleichsweise kurzen zeitlichen Intervallen erforderlich ist.

Der der Anströmseite zugewandte Stirnrahmen kann im Bereich der Langlöcher jeweils eine die Verdickung in Richtung des verjüngten Querschnitts untergreifende Auflaufschräge aufweisen. Hierdurch wird erreicht, daß der Filtertaschen-Werkstoff während der Querverschiebung des abdeckenden Stirnrahmens allmählich zunehmend zwischen den Dichtflächen verpreßt wird, wobei die gegenseitige Zuordnung der beiden Stirnrahmen auch nach einem Wechsel der Filtertasche stets identisch ist und dadurch während der gesamten Gebrauchsdauer bei Verwendung von Filtertaschen mit übereinstimmender Dicke ein gleichbleibend gutes Abdichtungsergebnis erzielt werden kann. Fehlmontagen sind von außen gut erkennbar. Das Filtermaterial der Filtertasche ist in montiertem Zustand unter elastischer Vorspannung zwischen den beiden Stirnrahmen angeordnet.

Zum Ausgleich von handelsübliche Toleranzen übersteigende Änderungen der Materialstärke der Filtertasche und/oder zur wahlweisen Verwendung von doppellagigen Filtertaschen, kann es vorgesehen sein, daß die Vorsprünge mit ihren Verdickungen entgegen der Anströmrichtung federnd gelagert sind. Weitgehend unveränderliche Anpreßkräfte bei stark wechselnden Materialstärken und als Folge davon eine in jedem Falle optimale Abdichtung sind insbesondere dann gewährleistet, wenn zur Abfederung der Vorsprünge Tellerfedern mit S-förmiger Federkennlinie verwendet werden. Die im Einzelfalle optimale Anpreßkraft läßt sich bedarfsweise durch einfache Versuche ermitteln. Sie bleibt bei solchen Ausführungen auch dann erhalten, wenn die Dicke des Filtermaterials als Folge von Setzungserscheinungen abnimmt.

Die Filtertasche kann in einer Ausgestaltungsform zwischen den Dichtflächen durch Verbindungsmittel verpreßt sein, die im wesentlichen gleichmäßig über den gesamten Umfang der Dichtflächen und die stirnseitige Mündung der Filtertasche im montierten Zustand verteilt sein können. Hierbei ist von Vorteil, daß die Filtertasche im Bereich ihrer Festlegungsstellen in den Stirnrahmen mit einer im wesentlichen entlang des gesamten Umfangs gleichmäßig verteilten Flächenpreßung belastet ist. Dadurch wird eine staubdichte Verbindung zwischen den Bauteilen begünstigt und gleichzeitig das Filtermedium nicht in unzulässig hoher Weise verpreßt oder abgequetscht wird. Luftspalte für Staubpartikelablagerungen sowie Durchbruchstellen werden weitgehend ausgeschlossen. Der Wert der optimalen Flächenpressung ist in Versuchen leicht ermittelbar.

Weiterhin ist es möglich zur Vermeidung von Staubdurchbrüchen, daß als zusätzliche Abdichtung die Stirnrahmen auf zumindest zwei einander gegenüberliegenden Seiten durch Bajonettverschlüsse aneinander festlegbar sind.

Nach einer vorteilhaften Ausgestaltung besteht zumindest ein Stirnrahmen aus polymerem Werkstoff. Der Stirnrahmen kann beispielsweise unter Anwendung des Spritzgießverfahrens erzeugt sein, was es ermöglicht, bedarfsweise erwünschte Dichtleisten und/oder -nuten sowie Mittel, die der gegenseitigen Verbindung der beiden Stirnrahmen dienen, kostengünstig anzubringen, ohne daß ein hohes Gewicht in Kauf genommen werden müßte. Als polymerer Werkstoff gelangt vorzugsweise Polypropylen zur Anwendung.

Nach einer anderen Ausgestaltung ist es vorgesehen, daß zumindest ein Stirnrahmen mit einem umlaufenden, flexiblen Dichtelement aus polymerem Werkstoff versehen ist, das mit der Filtertasche und/oder dem Aufnahmerahmen dichtend in Eingriff bringbar ist. Als Dichtelement kann beispielsweise ein ringförmiger Vorsprung des Stirnrahmens dienen, der von folienartig geringer Wandstärke und dadurch in der Lage ist, sich an Oberflächenunebenheiten der abzudichtenden Flächen dichtend anzuschmiegen. Die Verwendung von Dichtelementen aus einem weichelastischem Dichtungswerkstoff, beispielsweise aus einem thermoplastisch verarbeitbaren Kautschuk ist jedoch ebenfalls möglich. Derartige Dichtelemente können gegebenenfalls einen einstückigen Bestandteil eines im übrigen aus Polypropylen bestehenden Stirnrahmen bilden und mit diesem gemeinsam erzeugt sein.

Falls mehrere Dichtelemente dieser Art an einem einzigen Stirnrahmen vorgesehen sind, besteht die Möglichkeit, die einzelnen Dichtelemente einstückig ineinander übergehend auszubilden und beispielsweise im Bereich von Kanälen miteinander zu verbinden, die in den Stirnrahmen eingetieft sind oder diesen durchdringen. Die Erzeugung ist bei einer solchen Ausführung ganz besonders einfach.

Dichtelemente der vorstehend angegebenen Art können aus einem gegebenenfalls geschäumten, polymeren Werkstoff bestehen. Ihre Ausbildung als Lippendichtung hat sich insofern bewährt, als die Reinigung besonders einfach ist und eine Abdichtung unebener Oberflächen durch die Verwendung von Lippendichtungen ganz besonders zuverlässig gelingt. Diese können bedarfsweise auch in einer Reihenschaltung hintereinander liegend angeordnet und bei einer Anbringung auf beiden einander gegenüberliegenden Dichtflächen so verteilt sein, daß die einander gegenüberliegenden Dichtlippengruppen einander auf Lücke zugeordnet sind.

Als besonders zweckmäßig hat es sich erwiesen, wenn die keilförmige Filtertasche ein rechteckig begrenztes Profil hat. Sie gelangt normalerweise nicht als Einzelelement zur Anwendung, sondern in einer gruppenweise Zusammenfassung, wobei mehrere Filtertaschen durch einen einzigen Wechselrahmen vereint und mit Hilfe des Wechselrahmens in dem Aufnahmerahmen lösbar festgelegt sind. Filtertaschen von rechteckig begrenztem Profil werden dabei zweckmäßig so angeordnet, daß sich die längere Kante in senkrechter Richtung erstreckt. Hierdurch wird erreicht, daß die Filtertaschen bei nachlassender Luftströmung nicht nach unten absinken sondern die sich während der bestimmungsgemäßen Verwendung ergebende Form auch bei nachlassender Luftströmung weitgehend beibehalten. Die die Filtertaschen bildenden Filtermatten bestehen normalerweise aus einem Vliesstoff, dessen flächenhaft zusammengelagerte natürliche und/oder synthetische Fasern durch eine gegenseitige Vernadelung und/oder Verklebung oder Verschweißung miteinander verbunden sind. Filtermatten dieser Art neigen dazu, sich unter einer lang anhaltenden, statischen Belastung bleibend zu verformen, was vorliegend dazu führen kann, daß sich die Wandungen einander benachbarter Filtertaschen gegenseitig berühren. Die Folge ist ein Verlust an aktiv zur Verfügung stehender Filterfläche. Um diesen Nachteil zu vermeiden, hat es sich als vorteilhaft bewährt, wenn die die Filtertaschen bildenden Filtermatten im aufeinander abgelegten Zustand seitlich beiderseits durch Kanten begrenzt sind, die mit der späteren Anströmrichtung einen spitzen Winkel einschließen und wenn der spitze Winkel im Bereich der Mündung der Filtertasche größer ist als in den übrigen Bereichen. Hierdurch wird erreicht, daß die Seitenwandungen einander benachbarter Filtertaschen bereits im neuwertigen Zustand dicht hinter der Mündung einen so großen Abstand voneinander haben, daß eine gegenseitige Berührung auch im langfristigen Gebrauch völlig ausgeschlossen ist. Auch diese Fläche stehen damit als aktive Filterflächen dauerhaft zur Verfügung. Im weiter zurückliegenden Bereich läßt sich eine gegenseitige Berührung einander benachbarter Filtertaschen dadurch verhindern, daß deren Wandungen jeweils durch geeignete Mittel aneinander festgelegt sind, beispielsweise durch eine gegenseitige Vernähung, Verklebung, Verschweißung oder Abstandhalter, die im Inneren einer jeden Filtertasche angeordnet sind. Die Verbindungsmittel können dabei gleichzeitig der Aussteifung und/oder Verfestigung der Filtermatten dienen.

Nach einer anderen Ausgestaltung ist es vorgesehen, daß die Filtertasche in dem an die Dichtfläche angrenzenden Bereich mit zumindest einer sich parallel zu der Dichtfläche erstreckenden Schwächungslinie versehen ist. Diese bezeichnet die örtliche Lage einer Faltkante, die sich nach dem Einfügen einer neuen Filtertasche in den Wechselrahmen ergibt. Die Auswirkung eines großen Beugungsradius in diesem Bereich wird dadurch vermieden mit der Folge, daß dieser Bereich bereits bei der neuwertigen Filtertasche sofort als aktive Filterfläche verfügbar ist. Die Schwächungslinie kann aus einer Schweiß- oder Klebenaht bestehen. Die Verwendung einer maschinengenähten Naht ist ebenfalls möglich, jedoch ist es bei einer solchen Ausbildung erforderlich, die Einstechlöcher staubdicht zu gestalten.

Durch die trennbare Festlegung der beiden Stirnrahmen aneinander und an den Filtertaschen können die materialeinheitlich hergestellten Filtertaschen einer problemlosen Entsorgung zugeführt werden. Der Stirnrahmen selbst ist wiederverwendbar. Der bedarfsweise Austausch der Filtertaschen kann leicht und ohne Werkzeug vorgenommen werden. Durch die Wiederverwendung der Stirnrahmen ergeben sich wesentlich verringerte Betriebskosten und eine Reduzierung der im Anschluß an eine Verwendung zu entsorgenden Bauteile.

Anhand eines Ausführungsbeispieles unter Zuhilfenahme der Zeichnungen wird der erfindungsgemäße Wechselrahmen im Folgenden näher erläutert.

Es zeigen:
Figur 1 den erfindungsgemäßen Wechselrahmen mit Verbindungsmitteln
Figur 2 eine Filtertasche
Figur 3 eine Verbindung der Stirnrahmen mit den Filtertaschen
Figur 4 den Wechselrahmen mit mehreren Filtertaschen.
Figur 5 den Ausschnitt gemäß Figur 3 aus einem Wechselrahmen in einer Ansicht von oben.
Figur 6 einen Wechselrahmen in längsgeschnittener Darstellung, bei dem die Stirnrahmen miteinander verschraubt sind.
Figur 7 einen Wechselrahmen mit zwei daran festgelegten Filtertaschen in längsgeschnittener Darstellung.
Figur 8 eine zusammengelegte Filtertasche in versandfertiger Form.

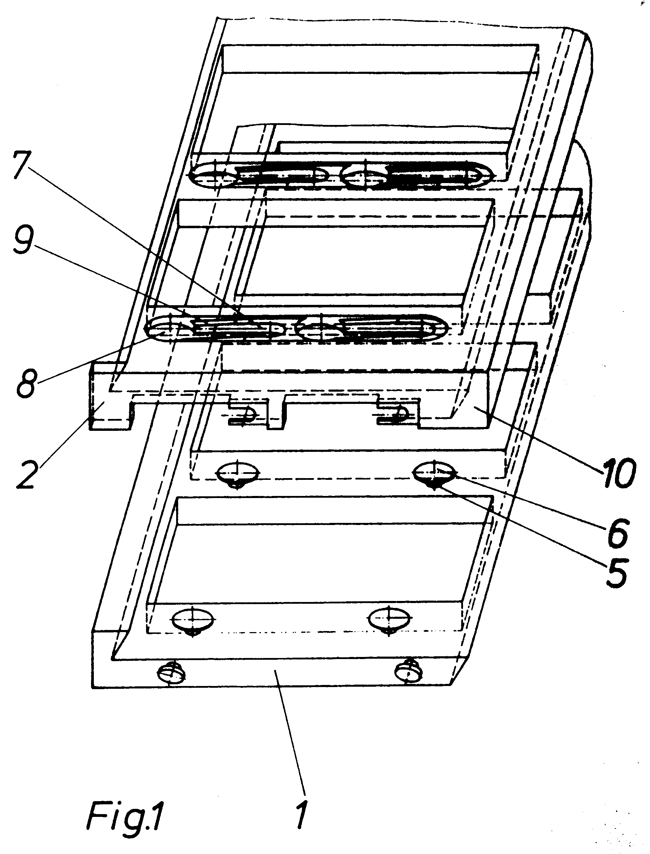

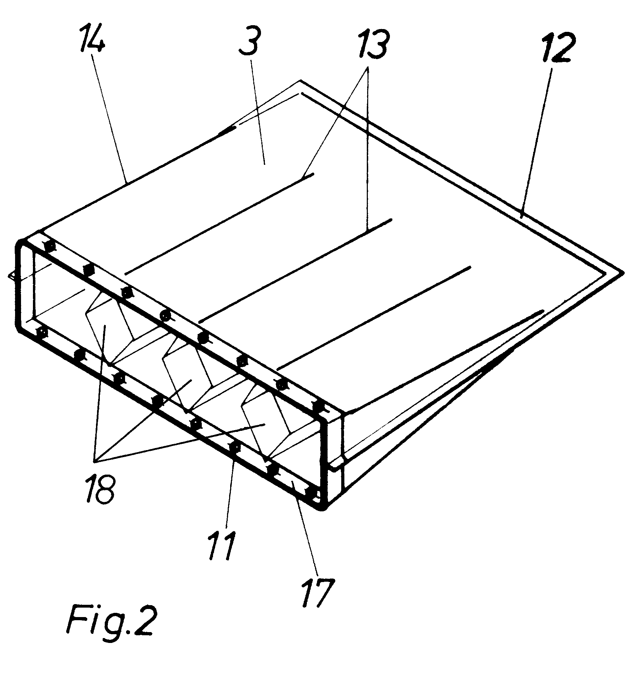

In Figur 1 ist ein erfindungsgemäßer Wechselrahmen dargestellt, der zwei Stirnrahmen 1 und 2 umfaßt. Die Stirnrahmen 1 und 2 sind unter Zwischenfügung von zumindest einer keilförmigen Filtertasche 3 (Figur 2) aneinander andrückbar, wobei das Andrücken aneinander und an die Filtertasche 3 im wesentlichen parallel zu der Anströmrichtung der zu reinigenden Luft erfolgt. Die beiden Stirnrahmen 1 und 2 sind biegesteif und vorzugsweise aus einem polymeren Werkstoff gefertigt. Abweichend kann ein metallischer Werkstoff zur Fertigung der Stirnrahmen 1 und 2 verwendet werden.

In Figur 2 wird eine Filtertasche 3 gezeigt, die aus mehr oder weniger festgebundenen einzelnen Filtermattenzuschnitten oder auch -bahnen hergestellt ist, die ganz oder teilweise aus thermoplastischen Fasern bestehen. Die Zuschnitte oder Bahnen werden paarweise Staubluftseite auf Staubluftseite aufeinander gelegt und entlang der Kante 12 miteinander verschweißt. Zur Erzielung einer weiteren Aussteifung der Filtertaschen sowie zur Optimierung der Anströmverhältnisse sind in das Innere der Taschen je nach Qualität der Filtermedien und ihrer Durchflußwiderstände eine verschiedene Anzahl trapezförmiger, flächiger Abstandshalter 18 aus Vliesstoff, Folie auch Gewebe eingeklebt oder eingeschweißt 13. Außerdem sind die Filtermatten durch lokales Verschweißen der enthaltenen, thermoplastischen Bestandteile in Form von Versteifungsrippen 14 verstärkt. Die Distanzelemente sind doppelwandig ausgebildet und von trapezförmiger Gestalt. Ihre einschubartige Ausbildung hat sich hinsichtlich der Stabilisierung der dem Luftstrom ausgesetzten Filtertaschen als besonders vorteilhaft erwiesen. Die Filtertaschen neigen nicht zu Flatterbewegungen.

Die Stirnrahmen 1 und 2 und die Filtertaschen 3 sind staubdicht miteinander verpreßt. Die Verbindungsmittel bestehen aus Vorsprüngen 5 mit Verdickungen 6, die im wesentlichen gleichmäßig über den gesamten Umfang der stirnseitigen Mündung der Stirnrahmen 1 und 2 verteilt sind. Die Stirnrahmen 1 und 2 sowie die Vorsprünge 5 (Figur 1) bestehen aus polymerem Werkstoff und sind einstückig ineinander übergehend ausgebildet. Die Vorsprünge 5 und die Verdickung 6 sind im wesentlichen T-förmig ausgebildet, wobei die Verdickung 6 in diesen Ausführungsbeispielen einen Durchmesser aufweist, der größer ist, als der Durchmesser der Ausnehmungen der Filtertasche 3. Dadurch wird die Filtertasche auf den Vorsprüngen 5 bereits unverlierbar gehalten, wenn die Stirnrahmen 1 und 2 noch nicht miteinander in Eingriff sind. Die Montage ist durch diese Ausgestaltung wesentlich vereinfacht. Zum Ausgleich von Toleranzen bezüglich der Dicke der flexiblen Filtermatte, aus der die Filtertasche 3 besteht und zum Ausgleich von Relaxationserscheinungen sind die beiden Stirnrahmen 1,2 durch die Vorsprünge 5 und die daran anschließende Verdickung 6 unter elastischer Vorspannung federnd miteinander verbunden. Die elastisch nachgiebige Lagerung der beiden Stirnrahmen 1,2 aneinander bedingt eine weitgehend ausgeglichene Verpressung der der beiden Dichtflächen mit der Filtertasche und somit weitgehend übereinstimmendes Abdichtungsergebnis während einer langen Gebrauchsdauer.

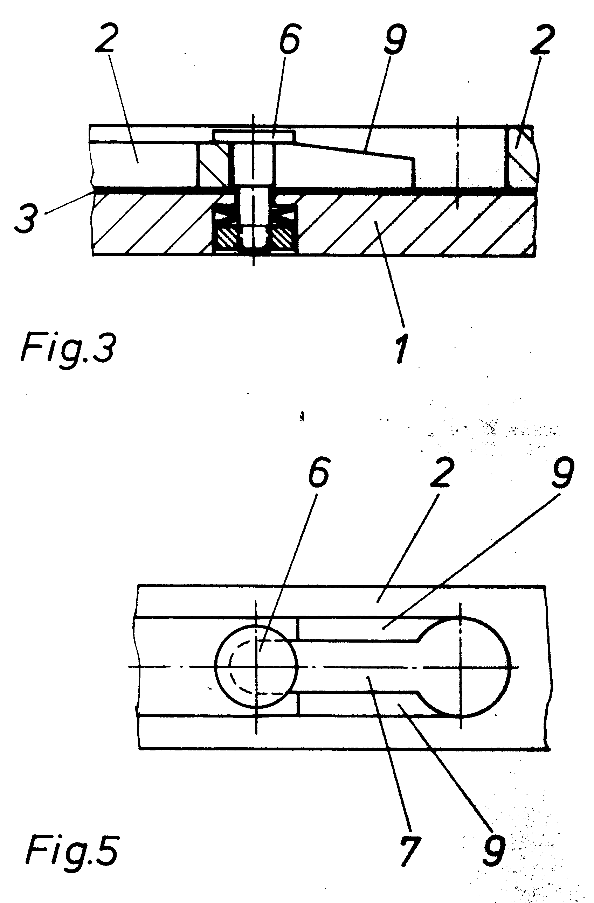

In Figur 3 ist die gegenseitige Zuordnung der beiden Stirnrahmen 1,2 und der Filtertasche zueinander gezeigt. Die Montage der Filtertasche 3 zwischen den beiden Stirnrahmen 1,2 erfolgt dadurch, daß die Befestigungslöcher 11 der Filtertasche 3 zunächst über die Verdickung 6 der Vorsprünge 5 gezogen werden. Dadurch ist eine vormontierbare Einheit entstanden. Anschließend wird der der Anströmseite zugewandte Stirnrahmen 2 auf die Verdickungen 6 aufgesetzt und in Montagerichtung solange verschoben, bis die beiden Stirnrahmen miteinander in Eingriff sind. Durch die Auflaufschräge 9 nimmt der Anpreßdruck der Dichtflächen an die Filtertasche kontinuierlich bis zu einem vorbestimmten Höchstwert zu, bei dem eine optimale Abdichtung gewährleistet ist, zu.

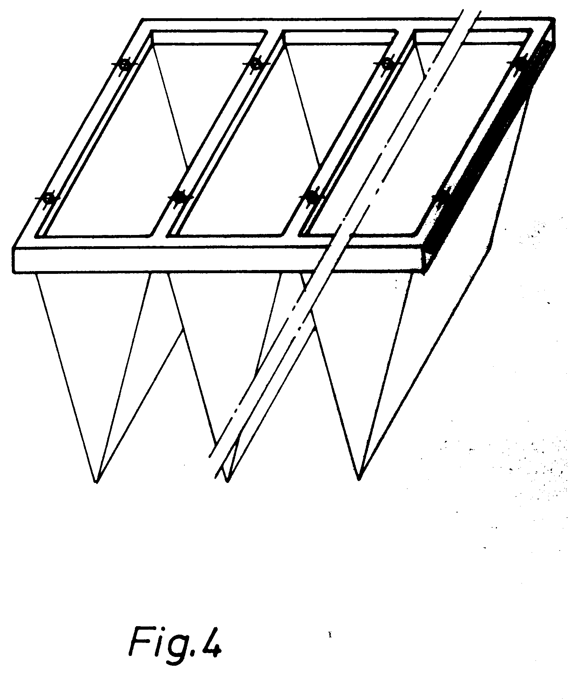

In Figur 4 ist ein kompletter Filter mit Wechselrahmen gezeigt. Zusätzlich werden die beiden Stirnrahmen 1,2 durch Bajonettverschlüsse 10 aneinander festgelegt, die im Bereich ihres Außenumfangs angeordnet sind.

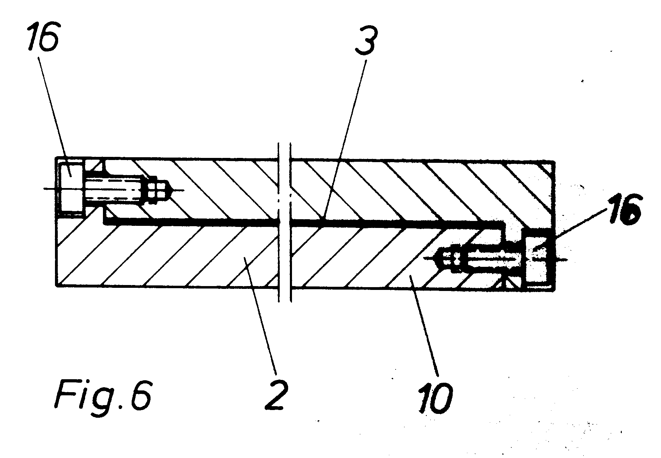

In Figur 5 ist der in Figur 3 gezeigte Ausschnitt aus einem Wechselrahmen in einer Ansicht von oben wiedergegeben. Es ist zu erkennen, daß die Verdickung 6 des Vorsprungs des unteren Stirnrahmens 1 beim Aufschieben auf die Auflaufschräge 9 symmetrisch unterstützt wird. Hierdurch wird ein Verklemmen verhindert und eine besonders gleichmäßige Einspannung der Filtertasche 3 zwischen den einander gegenüberliegenden Dichtflächen der Stirnrahmen 1,2 erreicht.

Figur 6 zeigt einen Wechselrahmen nach dem Einfügen einer Filtertasche in längsgeschnittener Darstellung. Die beiden Stirnrahmen 1,2 sind dabei zusätzlich durch Schrauben 16 miteinander verbunden, die quer zur Anströmrichtung angeordnet sind. Der Wechselrahmen bildet dadurch einschließlich der in ihm festgelegten Filtertasche eine Baueinheit, die besonders leicht zu handhaben und zu montieren ist.

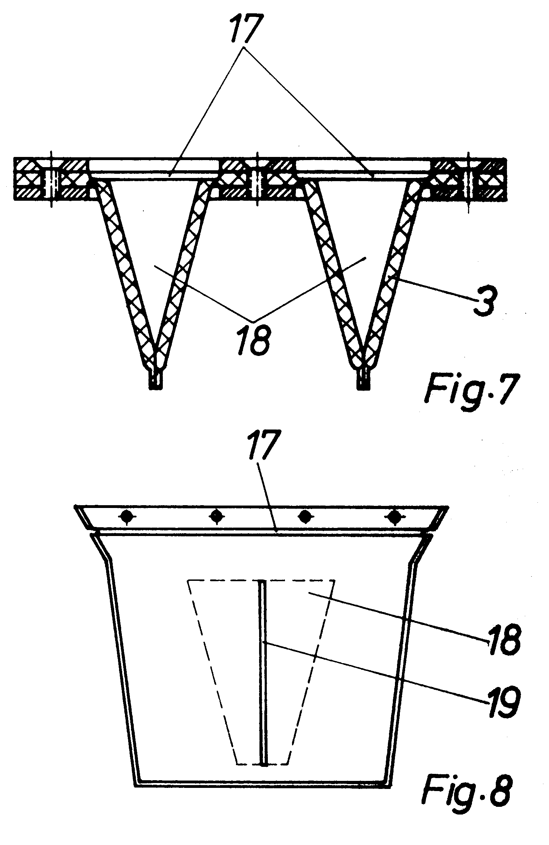

In Figur 7 ist ein Wechselrahmen in quergeschnittener Darstellung wiedergegeben, an dem zwei einander benachbarte Filtertaschen festgelegt sind. Die Filtertaschen bestehen aus einem thermoplastisch verschweißbaren Material. Sie sind im Bereich ihrer Mündung mit einer sich parallel zu den Dichtflächen erstreckenden, umlaufende Schwächungslinie 17 versehen, in deren Bereich das die Filtertasche 3 bildende Fasermaterial filmartig verschweißt ist. Hierdurch wird die örtliche Lage einer Faltkante bestimmt, die sich sofort beim Einfügen der neuwertigen Filtertasche in den Wechselrahmen ergibt. Bereits die neuwertige Filtertasche weist dadurch ein präzise vorher bestimmtes Rechteckprofil im Bereich von ihrer Mündung auf, wodurch sie in allen Teilbereichen ihrer gesamten Oberfläche von Anfang an als aktives Filterelement verfügbar ist.

In einem Abstand von der Mündung und von dem von der Mündung abgewandten Ende ist im Inneren einer jeden Filtertasche 3 ein Abstandhalter 18 von trapezförmigem Zuschnitt angeordnet, der die einander gegenüberliegenden Seitenwandungen miteinander verbindet. Die Abstandhalter 18 sind doppelwandig gestaltet und blähen sich während der bestimmungsgemäßen Verwendung in der in Figur 2 gezeigten Weise auf. Sie wirken hierdurch zugleich stabilisierend in bezug auf die Erzielung selbsttragender Eigenschaften. Auch bei nachlassender Luftströmung neigen die Filtertaschen daher nicht dazu, abzusinken und Faltkanten an nicht vorher bestimmten Stellen auszubilden. Das unkontrollierte Auftreten von Staubdurchbruchstellen wird dadurch unterdrückt. In die Filtertaschen sind Abstandhalter 18 eingefügt, die durch eine gegenseitige Verschweißung mit den die Filtertaschen 3 bildenden Filtermatten verbunden sind. Die Schweißnähte bilden dabei zugleich Versteifungselemente, durch die der Erzielung selbsttragender Eigenschaften der Filtertaschen 3 während der bestimmungsgemäßen Verwendung begünstigt wird.

Figur 8 zeigt eine versandfertige Filtertasche in zusammengelegtem Zustand. Sie besteht im wesentlichen aus zwei Filtermattenzuschnitten, die die gezeigte Form haben und die flach aufeinanderliegend im Bereich der seitlichen Kanten und in dem Bereich der rückwärtigen Kante durch eine ineinander übergehende Schweißnaht miteinander verbunden sind. Im Bereich der Mündung weist jeder Mattenzuschnitt eine Schwächungslinie 17 auf, die ebenfalls durch eine Schweißnaht gebildet ist und in deren Bereich das die Filtermatten bildende, thermoplastische Fasermaterial folienartig in sich verschweißt ist. Im Inneren der Filtertasche ist ein doppelwandiger Abstandshalter 18 angeordnet, der von trapezförmiger Gestalt in einem Abstand von der Mündung und von der Rückseite der Filtertasche mit ihren Seitenwandungen verschweißt ist. Die durchgehend ausgebildete Schweißnaht ist mit 19 bezeichnet.

## Patentansprüche

1. In einem Aufnahmerahmen verwendbarer Wechselrahmen für zumindest eine Filtertasche (3) aus einer flexiblen Filtermatte und mit zumindest einem keilförmigen Abschnitt, umfassend zwei unter Zwischenfügung der Filtermatte mit Dichtflächen aneinander andrückbare, biegesteife Stirnrahmen (1, 2), die aneinander und an der Filtertasche (3) festlegbar sind, wobei sich die Dichtflächen im wesentlichen quer zu der Anströmrichtung erstrecken und wobei die Stirnrahmen (1) parallel zu der Anströmrichtung aneinander andrückbar sind, dadurch gekennzeichnet, daß die Stirnrahmen (1,2) durch Vorsprünge (5) aneinander festlegbar sind, die die Filtertasche (3) im wesentlichen parallel zur Anströmrichtung durchdringen und daß die Vorsprünge (5) an dem der Reinluftseite zugewandten Stirnrahmen (1) festgelegt sind und an den der Anströmrichtung zugewandten Enden jeweils eine Verdickung (6) aufweisen und daß die Verdickungen (6) in Hinterschneidungen (7) des der Anströmseite zugewandten Stirnrahmens (2) einrastbar sind.

2. Wechselrahmen nach Anspruch 1, dadurch gekennzeichnet, daß die Hinterschneidungen (7) jeweils durch ein Langloch (8) gebildet sind, das sich quer zur Anströmrichtung erstreckt, daß die Langlöcher (8) an einem Ende einen erweiterten Querschnitt aufweisen und am anderen Ende hinsichtlich ihres Querschnitts verengt sind und daß der der Anströmseite zugewandte Stirnrahmen (2) mit dem erweiterten Querschnitt der Langlöcher (8) auf die Vorsprünge (5) aufstülpbar und durch eine Relativverschiebung quer zur Anströmrichtung an den Vorsprüngen (5) festlegbar ist.

3. Wechselrahmen nach einem der Ansprüche 1 oder 2, dadurch gekennzeichnet, daß der der Anströmseite zugewandte Stirnrahmen (2) im Bereich der Langlöcher (8) jeweils eine die Verdickung (6) in Richtung des verjüngten Querschnitts untergreifende Auflaufschräge (9) aufweist.

4. Wechselrahmen nach einem der Ansprüche 1 bis 3, dadurch gekennzeichnet, daß die Vorsprünge (5) entgegen der Anströmrichtung federnd gelagert sind.

5. Wechselrahmen nach einem der Ansprüche 1 bis 4, dadurch gekennzeichnet, daß die Filtertasche (3) Durchbrechungen (11) aufweist und mit den Durchbrechungen auf die Vorsprünge (5) auffädelbar ist.

6. Wechselrahmen nach Anspruch 5, dadurch gekennzeichnet, daß die Filtertasche (3) in dem von der Dichtfläche umschlossenen und unmittelbar an die Dichtfläche angrenzenden Bereich mit zumindest einer sich parallel zu der Dichtfläche erstreckenden Schwächungslinie (17) versehen ist.

7. Wechselrahmen nach einem der Ansprüche 1 bis 6 zur Festlegung einer keilförmigen Filtertasche, die im montierten Zustand eine rechteckig begrenzte Mündung aufweist, dadurch gekennzeichnet, daß die Filtertasche im unmontierten Zustand zu einem ebenen Flächengebilde zusammenlegbar ist, das in seitlicher Richtung durch Kanten begrenzt ist, die mit der Anströmrichtung einen Winkel einschließen und daß der Winkel im Bereich der Mündung der Filtertasche größer ist als im Bereich der übrigen Zonen.

8. Wechselrahmen nach einem der Ansprüche 1 bis 7, dadurch gekennzeichnet, daß die beiden Stirnrahmen (1,2) und die Filtertasche (3) durch Verbindungsmittel aneinander andrückbar sind, die im wesentlichen gleichmäßig über den gesamten Umfang der Stirnrahmen (1,2) und der stirnseitigen Mündung der Filtertaschen (3) im montierten Zustand verteilt sind.

9. Wechselrahmen nach einem der Ansprüche 1 bis 8, dadurch gekennzeichnet, daß die Stirnrahmen (1,2) auf zumindest zwei einander gegenüberliegenden Seiten durch Bajonettverschlüsse (10) aneinander festgelegt sind.

10. Wechselrahmen nach einem der Ansprüche 1 bis 9, dadurch gekennzeichnet, daß zumindest ein Stirnrahmen (1, 2) aus einem polymeren Werkstoff besteht.

11. Wechselrahmen nach einem der Ansprüche 1 bis 10, dadurch gekennzeichnet, daß zumindest ein Stirnrahmen (1, 2) mit einem umlaufenden, flexiblen Dichtelement aus polymeren Werkstoff versehen ist, das mit der Filtertasche (3) und/oder dem Aufnahmerahmen in dichtenden Eingriff bringbar ist.

12. Wechselrahmen nach Anspruch 11, dadurch gekennzeichnet, daß das Dichtelement zumindest eine Dichtleiste und/oder Dichtnut umfaßt.

## Claims

1. A changeable frame which can be used in a receiving frame and is intended for at least one filter pocket (3) which is made of a flexible filter mat and has at least one wedge-shaped section, the changeable frame comprising two flexurally rigid end frames (1, 2) which can be pressed against one another by way of sealing surfaces, with the filter mat interposed therebetween, and can be secured to one another and to the filter pocket (3), it being the case that the sealing surfaces extend essentially transversely with respect to the direction of oncoming flow and the end frames (1, 2) can be pressed against one another parallel to the direction of oncoming flow, characterized in that the end frames (1, 2) can be secured to one another by protrusions (5) which pass through the filter pocket (3) essentially parallel to the direction of oncoming flow, and in that the protrusions (5) are secured to the end frame (1), which faces the clean-air side, and each have one thickened portion (6) at the ends which face the direction of oncoming flow, and in that the thickened portions (6) can be latched in undercuts (7) of the end frame (2), which faces the oncoming-flow side.

2. A changeable frame according to claim 1, characterized in that the undercuts (7) are each formed by a slot (8) which extends transversely with respect to the direction of oncoming flow, in that the slots (8) have a widened cross-section at one end and are narrowed in cross-section at the other end, and in that the end frame (2), which faces the oncoming-flow side, can be pushed onto the protrusions (5) by way of the widened cross-section of the slots (8) and can be secured to the protrusions (5) by virtue of a relative displacement transverse with respect to the direction of oncoming flow.

3. A changeable frame according to either of claims 1 and 2, characterized in that, in the region of each of the slots (8), the end frame (2), which faces the oncoming-flow side, has a run-on slope (9) which grips beneath the thickened portion (6) in the direction of the tapered cross-section.

4. A changeable frame according to any one of claims 1 to 3, characterized in that the protrusions (5) are mounted in a resilient manner counter to the direction of oncoming flow.

5. A changeable frame according to any one of claims 1 to 4, characterized in that the filter pocket (3) has through-openings (11) and can be fitted onto the protrusions (5) by way of the through-openings.

6. A changeable frame according to claim 5, characterized in that, in the region which is enclosed by the sealing surface and is immediately adjacent to the sealing surface, the filter pocket (3) is provided with at least one weakening line (17), which extends parallel to the sealing surface.

7. A changeable frame according to any one of claims 1 to 6 for securing a wedge-shaped filter pocket which, in the fitted state, has a mouth which is bounded by a rectangle, characterized in that, when not in the fitted state, the filter pocket can be collapsed to form a planar sheet-like structure which is bounded in the lateral direction by edges which enclose an angle with the direction of oncoming flow, and in that the angle is larger in the region of the mouth of the filter pocket than elsewhere.

8. A changeable frame according to any one of claims 1 to 7, characterized in that the two end frames (1, 2) and the filter pocket (3) can be pressed against one another by connecting means which are distributed essentially uniformly over the entire periphery of the end frames (1, 2) and the end-side mouth of the filter pockets (3) in the fitted state.

9. A changeable frame according to any one of claims 1 to 8, characterized in that, on at least two mutually opposite sides, the end frames (1, 2) are secured to one another by bayonet closures (10).

10. A changeable frame according to any one of claims 1 to 9, characterized in that at least one end frame (1, 2) consists of a polymer material.

11. A changeable frame according to any one of claims 1 to 10, characterized in that at least one end frame (1, 2) is provided with a peripheral, flexible sealing element which is made of polymer material and can be brought into sealing engagement with the filter pocket (3) and/or the receiving frame.

12. A changeable frame according to claim 11, characterized in that the sealing element comprises at least one sealing strip and/or sealing groove.

## Revendications

1. Cadre de changement utilisable dans un cadre de réception, prévu pour au moins un sac de filtrage (3) formé par une natte filtrante flexible et ayant au moins une partie en forme de coin, comprenant deux cadres frontaux (1, 2) résistants à la flexion pouvant être pressés l'un sur l'autre avec des surfaces d'étanchéité entre lesquelles la natte filtrante est intercalée, lesquels cadres frontaux peuvent être fixés l'un sur l'autre et au sac de filtrage (3), les surfaces d'étanchéité s'étendant essentiellement perpendiculairement à la direction de soufflage et les cadres frontaux (1) pouvant être pressés l'un sur l'autre parallèlement à la direction de soufflage, caractérisé en ce que les cadres frontaux (1, 2) peuvent être fixés l'un sur l'autre au moyen de saillies (5) qui traversent le sac de filtrage (3) de manière essentiellement parallèlement à la direction de soufflage, et en ce que les saillies (5) sont fixées sur le cadre frontal (1) situé du côté de l'air pur et sont pourvues à chaque fois d'un épaississement (6) aux extrémités tournées vers la direction de soufflage, et en ce que les épaississements (6) peuvent être emboîtés dans des contre-dépouilles (7) du cadre frontal (2) situé sur le côté de soufflage.

2. Cadre de changement selon la revendication 1, caractérisé en ce que les contre-dépouilles (7) sont formées à chaque fois par un trou oblong (8) qui s'étend perpendiculairement à la direction de soufflage, en ce que les trous oblongs (8) ont une section transversale élargie à une extrémité et une section transversale rétrécie à l'autre extrémité, et en ce que le cadre frontal (2) situé sur le côté de soufflage peut être enfoncé sur les saillies (5) avec la section transversale élargie des trous oblongs (8) et fixé sur les saillies (5) grâce à un déplacement relatif perpendiculaire à la direction de soufflage.

3. Cadre de changement selon l'une des revendications 1 ou 2, caractérisé en ce que le cadre frontal (2) situé sur le côté de soufflage est pourvu à chaque fois, dans la région des trous oblongs (8), d'une surface inclinée de réception (9) qui serre le dessous de l'épaississement (6) en direction de la section transversale rétrécie.

4. Cadre de changement selon l'une des revendications 1 à 3, caractérisé en ce que les saillies (5) sont montées d'une manière élastique dans le sens opposé au sens de soufflage.

5. Cadre de changement selon l'une des revendications 1 à 4, caractérisé en ce que le sac de filtrage (3) est pourvu de découpures (11) et peut être enfilé sur les saillies (5) par les découpures.

6. Cadre de changement selon la revendication 5, caractérisé en ce que le sac de filtrage (3) est pourvu, dans la région entourée par la surface d'étanchéité et directement adjacente à la surface d'étanchéité, d'au moins une ligne d'affaiblissement (17) s'étendant parallèlement à la surface d'étanchéité.

7. Cadre de changement selon l'une des revendications 1 à 6, destiné à fixer un sac de filtrage en forme de coin présentant, lorsqu'il est monté, une embouchure limitée de manière rectangulaire, caractérisé en ce que le sac de filtrage peut, lorsqu'il n'est pas monté, être plié de manière à obtenir une forme plane à deux dimensions limitée, dans la direction latérale, par des bords qui forment un angle avec la direction de soufflage, et en ce que l'angle est plus grand dans la région de l'embouchure du sac de filtrage que dans la région des autres parties.

8. Cadre de changement selon l'une des revendications 1 à 7, caractérisé en ce que les deux cadres frontaux (1, 2) et le sac de filtrage (3) peuvent être pressés l'un sur l'autre grâce à des moyens d'assemblage qui sont répartis de manière essentiellement uniforme sur toute la circonférence des cadres frontaux (1, 2) et de l'embouchure frontale des sacs à poussière (3) à l'état monté.

9. Cadre de changement selon l'une des revendications 1 à 8, caractérisé en ce que les cadres frontaux (1, 2) sont fixés l'un sur l'autre par des fermetures à baïonnette (10) sur au moins deux côtés opposés.

10. Cadre de changement selon l'une des revendications 1 à 9, caractérisé en ce qu'au moins un cadre frontal (1, 2) est formé d'une matière polymère.

11. Cadre de changement selon l'une des revendications 1 à 10, caractérisé en ce qu'au moins un cadre frontal (1, 2) est pourvu, sur tout son pourtour, d'un élément d'étanchéité flexible en matière polymère qui peut être mis en contact étanche avec le sac de filtrage (3) et/ou le cadre de réception.

12. Cadre de changement selon la revendication 11, caractérisé en ce que l'élément d'étanchéité comprend au moins une nervure d'étanchéité et/ou une rainure d'étanchéité.
